# EUROPÄISCHE PATENTSCHRIFT

(11) **EP 2 495 088 B1**
(45) Veröffentlichungstag und Bekanntmachung des Hinweises auf die Patenterteilung: **14.01.2015**
(21) Anmeldenummer: 12158107.8
(22) Anmeldetag: 05.03.2012
(51) Int. Cl.: B29C 49/46, B29C 49/56

(54) **Sterile Blasformmaschine sowie -verfahren mit unsteriler Medienzuführung**
Sterile blow moulding device and method with non-sterile media supply
Machine et procédé de moulage par soufflage dotés d'une entrée de fluide non-stérile

(30) Priorität: 04.03.2011 DE 102011013124
(43) Veröffentlichungstag der Anmeldung: 05.09.2012
(73) Patentinhaber: Krones AG, 93073 Neutraubling (DE)
(72) Erfinder: Voth, Klaus, 93083 Obertraubling (DE); Söllner, Jürgen, 93176 Beratzhausen (DE)
(74) Vertreter: Bittner, Bernhard

(56) Entgegenhaltungen:
- WO-A2-2010/020529
- FR-A1- 2 659 265
- FR-A1- 2 813 231

## Beschreibung

Die vorliegende Erfindung bezieht sich auf eine Vorrichtung zum Umformen von Kunsistoffvorformlingen zu Kunststoffbehältnissen. Derartige Vorrichtungen sind aus dem Stand der Technik seit langem bekannt. Dabei können beispielsweise erwärmte Kunststoffvorformlinge mittels Druckluftbeaufschlagung zu Kunststoffbehältnissen umgeformt werden. Auch sind aus dem Stand der Technik aseptische Blasmaschinen bekannt, in denen beispielsweise vorher mit einem Desinfektions- und/oder Sterllisationsmittel mikroblell gereinigte Kunststoffvorformlinge mit Druckmedium zu Kunststoffbehältnissen expandiert werden. Aus der WO 20 10 020 529 A2 ist eine derartige sterile Umformungsvorrichtung bekannt.

Als Druckmedium steht in diesen Anlagen ein steriles Gas, bei dem es sich um Luft, aber auch um andere Gase handeln kann, zur Verfügung. Als Desinfektions- oder Sterilisationsmittel werden häufig oxidative Desinfektions- oder Sterilisationsmittel eingesetzt. Der sterile Bereich in einer derartigen Anlage kann ebenfalls mit Desinfektions- oder Sterilisationsmitteln dekontaminiert werden und desgleichen können auch die Kunststoffvorformlinge auf diese Art und Weise dekontaminiert werden.

In einer derartigen Vorrichtung zum Umformen von Kunststoffvorformlingen zu Kunststoffbehältnissen werden fließfähige Medien, wie beispielsweise Druckluft, nicht nur zum Expandieren der Kunststoffvorformlinge eingesetzt, sondern beispielsweise auch zu anderen Zwecken, wie der pneumatischen Ansteuerung von Steuerkolben in einem Ventilblock (wie dies beispielsweise in der EP 1 271 029 B1, deren Offenbarungsgehalt ebenfalls durch Bezugnahme zum Offenbarungsgehalt der vorliegenden Anmeldung gemacht wird, beschrieben ist) oder auch zum Beaufschlagen eines Druckkissens in einem Blasformträger verwendet. In einer hygienisch optimierten bzw. aseptischen Blasmaschine ist es daher erforderlich, das Druckmedium zu sterilisieren.

Die DE 10 2010 022 129.5 beschreibt eine Vorrichtung und ein Verfahren zur Reinigung von Gas in Blasmaschinen. Dabei werden auch Komponenten einer aseptischen Blasmaschine, die der Druckmediumsaufbereitung dienen, beschrieben.

Aus der DE 199 4-4 111 A1 sind ein Verfahren und eine Vorrichtung zur Blasformung von Behältern bekannt. Dabei sind Blasformsegmente einer Blasstation relativ zueinander durch Einwirkung eines Druckmediums auf einem Druckeinwirkungsraum verspannbar. Dies bedeutet, dass in einem geschlossenen Zustand dieser Blasformen beispielsweise zwei Biasformhälften noch aufeinander zuspannbar sind. Dieser Druckeinwirkungsraum ist dabei mindestens in zwei Teilräume separiert, wobei mindestens einer der Teilräume unabhängig von den weiteren Teilräumen von den Druckmedien beaufschlagt wird.

Aus der DE 601 13 860 T2 ist ebenfalls eine Blasformmaschine bekannt, wobei hier zwischen einem Träger und einem Blasformelement eine Ausgleichskammer vorgesehen ist, in welche ein Fluid unter Druck eingespritzt wird, um das Formelement von seinem Träger zu spreizen. Die Ausgleichskammer ist hier durch eine Membran abgegrenzt, die eine Umkreisdichtung umfasst, wobei die Membran gegen das Formelement zur Auflage kommt.

Die DE 10 2008 018 785 A1 beschreibt ein Verfahren und eine Vorrichtung zur Blasformung von Behältern. In diesem Dokument sind ebenfalls Blasformen an einem Träger gehaltert und zumindest bereichsweise gegenüber dem Träger pneumatisch verspannt. Dabei wird das Gas zur pneumatischen Verspannung der Blasform gegenüber dem Träger über einen das Anschlusselement halternden Sockel, der gemeinsam mit dem Anschlusselement positionierbar ist, im Bereich des Trägers geleitet.

Aus der US 6,733,272 ist ebenfalls eine Blasformeinheit bekannt. Dabei weist diese Einheit Druckmittelausgleichkompensationsmittel auf, die hier als flexible Kissen ausgeführt sind, die zwischen dem Träger und der Blasform angeordnet sind.

FR2659265 beschreibt ein Verfahren, um Kunststoffbehältnisse herzustelen. Dabei ist eine abgedichtete Kammer zwischen einer Halbform und einem Glasfrontteil angeordnet.

Gleichwohl ist diese Druckmediumsaufbereitung sehr komplex und darüber hinaus sollte bei einer aseptischen Blasmaschine sichergestellt werden, dass auch bei kleinsten Rissen in Dichtungen, wie z. B. der Druckkissendichtung, keine unsterile Luft in die sterile Zone gelangt. Dabei kann durch den Einbau von Sensoren, die auch kleinste Leckagen der Dichtung detektieren, dieses Problem gelöst werden. Die möglichen Lösungen sind allerdings sehr kostenaufwendig und fehleranfällig.

Der vorliegenden Erfindung liegt daher die Aufgabe zugrunde, aus dem Stand der Technik bekannte aseptische Umformungsvorrichtungen zum Umformen von Kunststoffvorformlingen zu Kunststoffbehältnissen, insbesondere im Betrieb, kostengünstiger zu gestalten. Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Umformungsstationen auf, welche an einem beweglichen Träger angeordnet sind. Dabei weisen diese Umformungsstationen jeweils Blasformen auf, welche zur Aufnahme der Kunststoffvorformlinge dienen und innerhalb derer die Kunststoffvorformlinge zu den Kunststoffbehältnissen umformbar sind. Weiterhin weisen die Umformungsstationen jeweils relativ zu den Kunststoffvorformlingen bewegbare Beaufschlagungseinrichtungen auf, welche die in den Blasformen angeordneten Kunststoffvorformlinge mit einem sterilen fließfähigen Medium zu deren Expansion beaufschlagen.

Daneben weist die Vorrichtung einen Reinraum auf, innerhalb dessen die Umformungsstationen bzw. Blasformen transportiert werden, wobei dieser Reinraum mit wenigstens einer Wandung gegenüber der Umgebung angeordnet bzw. abgegrenzt ist. Bevorzugt trennt diese wenigstens eine Wandung daher den Sterilraum von der Umgebung.

Erfindungsgemäß weist die Vorrichtung wenigstens eine Zuführeinrichtung zum Zuführen eines fließfähigen Steuermediums an wenigstens einer Umformungsstation auf, welche Zuführeinrichtung wenigstens abschnittsweise innerhalb des Reinraums verläuft, wobei diese Zuführeinrichtung derart gegenüber dem Reinraum abgedichtet ist, dass das fließfähige Steuermedium auch als unsteriles Medium zu der Umformungsstation führbar ist.

Unter einer Zuführeinrichtung wird hier insbesondere eine Einrichtung verstanden, welche der Umformungsstation ein zu deren Betrieb dienendes Steuerfluid (welches insbesondere gasförmig ist) zuführt. Vorteilhaft ist jeder der Umformungsstationen wenigstens eine derartige Zuführeinrichtung zugeordnet, welche die betreffende Umformungsstation mit dem Steuerfluid versorgt. Bei der Zuführeinrichtung kann es sich beispielsweise um eine Luftleitung oder einen Luftkanal handeln. Unter Steuermedium bzw. -fluid ist u. a. auch ein Medium zum Beaufschlagen der Kammer bzw. des Luftraums zu verstehen.

Es wird daher vorgeschlagen, dass wenigstens eine Umformungsstation und bevorzugt sämtliche Umformungsstationen nicht nur mit steriler Blasluft zum Expandieren der Kunststoffvorformlinge, sondern auch mit unsteriler Steuerluft versorgt werden. Dies erscheint zunächst mit dem Erfordernis einer aseptischen Blasmaschine nicht vereinbar. Die Anmelderin hat jedoch herausgefunden, dass es denkbar ist, durch entsprechende Abdichtungsmaßnahmen auch innerhalb des Reinraums bzw. des aseptischen Bereiches unsterile Medien zu führen. Bevorzugt ist weiterhin eine Detektoreinrichtung, insbesondere innerhalb des Reinraums, vorgesehen, welche ein unsteriles Medium bzw. dessen Vorhandensein erfassen kann.

Durch diese Maßnahmen ist es möglich, die Menge an benötigtem sterilisiertem Medium zu reduzieren, da für einzelne Teilprozesse des Umformungsprozesses auch unsteriles Medium verwendet wird. Auf diese Weise können die Kosten für die (an sich teure) Sterilgaserzeugung vermindert werden.

Bei einer weiteren vorteilhaften Ausführungsform handelt es sich bei der Trägereinrichtung um eine drehbare Trägereinrichtung bzw. um ein Blasrad, an dem die einzelnen Umformungsstationen bzw. Blasstationen angeordnet sind. Unter dem Steuermedium wird dabei ein Medium verstanden, welches bevorzugt nicht zum Umformen der Kunststoffvorformlinge zu Kunststoffbehältnissen dient, sondern zum anderen insbesondere für den Umformungsvorgang erforderliche Vorgänge, die ebenfalls an den Umformungsstationen durchgeführt werden.

In der Zuführeinrichtung kann dabei wenigstens zeitweise während des Arbeitsbetriebs ein Überdruck herrschen, d.h. ein Druck, der höher ist als der Umgebungsdruck

Vorteilhaft weist die Vorrichtung wenigstens eine Dichtungseinrichtung auf, welche verhindert, dass das über die Zuführeinrichtung in den Sterilraum geführte unsterile Medium sich unkontrolliert bzw. unkontrollierbar innerhalb des Sterilraums ausbreitet.

In einer vorteilhaften Ausführungsform ist innerhalb des Reinraums eine Kammer angeordnet, die an einen mit unsterilem Medium beaufschlagbaren Bereich angrenzt. So kann die Zuführeinrichtung beispielsweise in einen vorgegebenen Bereich münden und die besagte Kammer grenzt an diesen Bereich an. Vorteilhaft ist dabei die Kammer bzw. dieser Aufnahmebereich als druckentlastete Kammer ausgeführt. Durch das Vorsehen dieser, insbesondere druckentlasteten, Kammer kann auch in Fällen von Leckagen ein Austritt des nichtsterilen Mediums in den Reinraum verhindert werden, da dieses nicht sterile Medium zunächst in die besagte Kammer gelangt. Von dieser Kammer kann evtl. ein eintretendes unsteriles Medium kontrolliert aus dem Reinraum abgeführt werden.

Bei einer weiteren vorteilhaften Ausführungsform ist die Kammer mittels einer Dichtungseinrichtung gegenüber dem Reinraum abgedichtet ist. Auf diese Weise wird erreicht, dass evtl. in die Kammer gelangendes unsteriles Medium nicht in den Reinraum, innerhalb dessen sich die Kammer befindet, gelangen kann. Vorteilhaft ist diese Dichtungseinrichtung elastische ausgebildet. Besonders Vorteilhaft sind zwei Wandungen der besagten Kammer bezüglich einander beweglich. Bei der elastischen Dichtungseinrichtung kann es sich beispielsweise um einen Faltenbalg handeln oder auch um eine sterile Membran. Vorteilhaft ist die Dichtungseinrichtung umlaufend um die Kammer ausgebildet.

Bei einer weiteren vorteilhaften Ausführungsform weist die Vorrichtung eine Abführleitung zum Abführen eines unsterilen Steuermediums aus dem Sterilraum auf. Auf diese Weise ist es möglich, beispielsweise durch Leckagen in den Sterilraum gelangendes unsteriles Medium wieder abzuführen. Vorteilhaft steht dabei diese Abführleitung in Strömungsverbindung mit der oben erwähnten (insbesondere druckentlasteten) Kammer. Vorteilhaft herrscht in der Kammer in einem Arbeitsbetrieb der Vorrichtung ein Normaldruck, es wäre jedoch auch denkbar, die Kammer über eine Abführleitung mit einem Unterdruck zu beaufschlagen, wobei durch diese Abführleitung bevorzugt unsteriles Medium aus dem Reinraum abführbar ist. Bei einer weiteren vorteilhaften Ausführungsform ist zwischen der Kammer und der Zuführeinrichtung eine Dichtungseinrichtung angeordnet.

Bei einer weiteren vorteilhaften Ausführungsform sind die einzelnen Blasformen in Blasformträgern angeordnet und zwischen den Blasformen und den Blasformträgern sind mit dem Steuermedium beaufschlagbare Druckausübungsräume angeordnet. Genauer gesagt können diese Druckausübungsräume zwischen dem Blasformträger und einer Tragschale angeordnet sein, wobei an dieser Tragschale wiederum ein Blasformteil angeordnet ist. Es wäre z.B. möglich, dass die Blasformen (bzw. deren Tragschalen) gegenüber den Blasformträgern abgedichtet sind, und der entsprechend abgedichtete Raum mit dem Steuermedium beaufschlagbar ist.

Der Druckausübungsraum kann jedoch auch durch einen Druckausübungskörper gebildet sein, bei dem es sich beispielsweise um ein Kissen handeln kann, welches mit einem insbesondere gasförmigen Medium beaufschlagbar ist.

Bei einer weiteren vorteilhaften Ausführungsform weist die Vorrichtung eine Ventilanordnung zum Steuern des den Kunststoffvorformlingen zugeführten gasförmigen sterilen Mediums auf, und diese Ventilanordnung ist vorteilhaft mit dem fließfähigen unsterilen Steuermedium zum Steuern der Ventilanordnung beaufschlagt. Diese Ventilanordnungen, die im Folgenden auch als Ventilblock bezeichnet werden, weisen dabei üblicherweise eine Vielzahl von Ventilen auf, die zur Zuführung der einzelnen Druckniveaus während des Expansionsvorgangs der Kunststoffvorformlinge vorgesehen sind. Bevorzugt sind diese Ventile dabei pneumatisch betätigte Ventile und als Steuermedium zum Betätigen dieser Ventile wird bevorzugt ein unsteriles Medium, wie beispielsweise nicht sterilisierte Luft, eingesetzt. Durch diese Vorgehensweise kann, wie oben erwähnt, die Menge an benötigtem gasförmigem sterilem Medium reduziert werden. Die Ventilanordnung kann dabei innerhalb des Reinraums angeordnet sein.

Durch die oben beschriebene zusätzliche druckentlastete Kammer kann beispielsweise für ein Druckkissen das unsterile Druckmedium verwendet werden. Falls diese Druckkissendichtung minimal undicht wird, geht die unsterile Luft nicht in die Sterilzone sondern gelangt direkt, beispielsweise durch eine Bohrung oder Leitung, in die Umgebung. Auf diese Weise ist eine sichere Trennung zwischen der unsterilen Arbeitsluft und der Sterilzone ermöglicht. Wie erwähnt ist ein ähnlicher Aufbau auch für druckentlastete Ventile in einer Ventilanordnung bzw. einem Ventilblock denkbar.

Auf diese Weise wird erreicht, dass lediglich zum Expandieren des Kunststoffvorformlings das sterile Druckmedium verwendet werden muss und für die Ansteuerung der Ventile und beispielsweise eines Druckkissens das unsterile Medium eingesetzt wird. Auf diese Weise müssen nur geringere Flußmengen an Luft durch etwaige Sterilfilter gelangen, wodurch eine geringere Größe und/oder Masse der Sterilfilter erreicht werden kann. Daneben können auch die Wartungsintervalle für die Sterilfilter verlängert werden. Weiterhin ist eine Kostenreduzierung denkbar.

Bei einer weiteren vorteilhaften Ausführungsform weist die Vorrichtung eine Sterilisationseinrichtung zum Gewinnen des sterilen fließfähigen Mediums auf. Diese Sterilisationseinrichtung kann dabei beispielsweise als Sterilfilter ausgebildet sein, der die eintretende Luft sterilisiert.

Dabei wäre es möglich, dass zunächst aus einem gemeinsamen Reservoir Druckluft entnommen wird, anschließend diese Druckluft in einer Aufzweigung aufgezweigt wird und ein Anteil der Luft unsteril zu beispielsweise dem Druckkissen oder der Ventilanordnung gelangt, während ein anderer Teil durch einen Sterilfilter geleitet wird und schließlich zum Expandieren der Kunststoffbehältnisse verwendet wird. Vorteilhaft werden fließfähige Medien zum Expandieren der Kunststoffvorformlinge und besonders bevorzugt auch das Steuermedium unter einem vorgegebenen Druck zugeführt, der bevorzugt zwischen 4 und 40 bar liegt.

Dabei ist es möglich, dass eine Medienleitung ausgehend von einem Reservoir aufgeteilt wird und das Medium eines Zweiges dieser Leitung sterilisiert wird um dann die Kunststoffvorformlinge zu expandieren. Das Medium eines zweiten Zweiges dieser Leitung kann unsterilisiert zu den Umformungsstationen gelangen. Diese Aufteilung der Medien kann dabei beispielsweise ausserhalb des Reinraums bzw. sogar ausserhalb der Maschine erfolgen. Auch kann diese Aufteilung in einem stehenden Bereich der Maschine oder in einem im Arbeitsbetrieb beweglichen Teil der Maschine erfolgen. Falls es sich bei der Maschine z.B. um eine Rundläufermaschine handelt, kann die Maschine einen Drehverteiler zum Aufteilen des fließfähigen Mediums an die einzelnen Umformungsstationen haben und die Aufteilung kann an diesem Drehverteiler erfolgen.

Bei einer weiteren vorteilhaften Ausführungsform weist die Vorrichtung auch ein Reservoir auf, welches unter Druck stehendes Medium zur Verfügung stellt.

Bei einer weiteren vorteilhaften Ausführungsform weist die Vorrichtung einen Drehverteiler auf, der fließfähiges Medium, insbesondere von einer gemeinsamen Zuführung, auf eine Vielzahl von beweglichen Umformungsstationen aufteilt.

Die vorliegende Erfindung ist weiterhin auf ein Verfahren zum Umformen von Kunststoffvorformlingen zu Kunststoffbehältnissen mittels einer Vielzahl von Umformungsstationen gerichtet, wobei diese Umformungsstationen auf einem beweglichen Träger angeordnet sind und die Umformungsstationen jeweils Blasformen aufweisen, welche zur Aufnahme der Kunststoffvorformlinge dienen und innerhalb derer die Kunststoffvorformlinge zu den Kunststoffbehältnissen umgeformt werden. Weiterhin werden in den Umformungsstationen mittels jeweils relativ zu den Kunststoffvorformlingen bewegbaren Beaufschlagungseinrichtungen die in den Blasformen angeordneten Kunststoffvorformlinge mit einem sterilen fließfähigen Medium zu deren Expansion beaufschlagt, und es ist weiterhin ein Reinraum vorgesehen, innerhalb dessen die Blasformen bzw. die Umformungsstationen transportiert werden. Dabei wird dieser Reinraum mittels wenigstens einer Wandung gegenüber einer Umgebung abgedichtet bzw. abgetrennt.

Erfindungsgemäß wird den innerhalb des Reinraums angeordneten Umformungsstationen in einem Arbeitsbetrieb der Vorrichtung wenigstens zeitweise ein unsteriles fließfähiges Steuermedium zugeführt.

Unter einem Arbeitsbetrieb wird dabei ein Betrieb der Vorrichtung verstanden, in dem die einzelnen Kunststoffvorformlinge zu Kunststoffbehältnissen expandiert werden. Es wird daher vorgeschlagen, dass - insbesondere zur Einsparung an sterilem Medium - auch ein unsteriles Medium den Umformungsstationen zugeführt wird, beispielsweise zur Betätigung eines (z.B. durch einen Luftraum ausgebildeten) Druckkissens zwischen Blasformträgern und Blasformen oder auch zur Betätigung der Ventile einer Ventilanordnung, welche die Zuführung der Blasluft an die Kunststoffvorformlinge steuert.

Vorteilhaft weisen die einzelnen Umformungsstationen jeweils Blasformen auf, die zumindest mittelbar an Blasformträgern angeordnet sind. Dabei können beispielsweise zwei relativ zueinander bewegliche Blasformträger vorgesehen sein, wobei an diesen beiden Blasformträgern Teile der Blasformen angeordnet sind, sodass durch eine Bewegung dieser Blasformträger die Blasform geöffnet oder geschlossen werden kann. Vorteilhaft erfolgt dabei das Öffnen oder Schließen mittels einer Schwenkbewegung zwischen den beiden Blasformträgerteilen.

Weitere Vorteile und Ausführungsformen ergeben sich aus den beigefügten Zeichnungen. Darin zeigen:
- Fig. 1: eine schematische Darstellung einer Anlage zum Herstellen von Kunststoffbehältnissen;
- Fig. 2: eine Ansicht eines Reinraums im Bereich einer Umformungsstation;
- Fig. 3: eine Darstellung einer Druckbeaufschlagungseinheit
- Fig. 4a-b: zwei Darstellungen zur Veranschaulichung der Zuführung von Medien; und
- Fig. 5: eine schematische Darstellung zur Veranschaulichung eines Druckkissens,
- und Fig. 6a,b: zwei weitere Darstellungen zur Veranschaulichung eines Druckkissens.

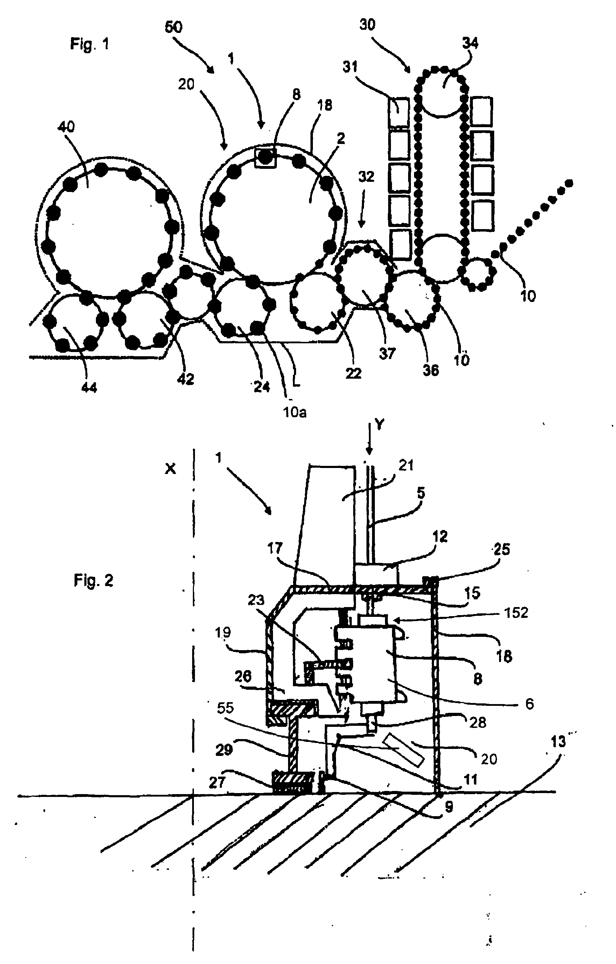

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen.

Die (nicht gezeigten) Blasformen sind innerhalb der Blasformträger 6 angeordnet Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

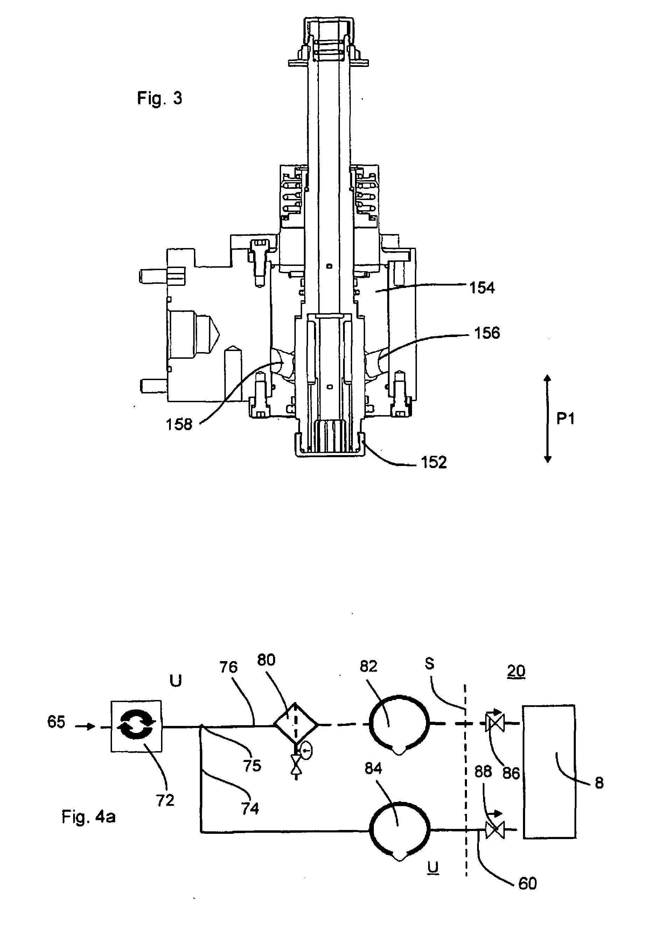

Fig. 3 zeigt eine Anordnung zum Beaufschlagen von Kunststoffvorformlingen mit Blasluft. Dabei ist eine Beaufschlagungseinrichtung 152 vorgesehen, welche an eine Mündung eines (nicht gezeigten) Kunststoffvorformlings anlegbar ist, um diesen zu expandieren. Das Bezugszeichen 156 (vgl. auch Fig. 2) kennzeichnet eine Zuführung zum Zuführen von Blasluft und das Bezugszeichen 158 eine entsprechende Öffnung zum Abführen der Blasluft. Die Beaufschlagungseinrichtung, welche beispielsweise eine Blasdüse aufweisen kann, ist gegenüber dem Kunststoffvorformling in der Richtung P1, welche zugleich auch eine Längsrichtung des Kunststoffvorformlings ist, beweglich. Dabei wäre es möglich, dass die Beaufschlagungseinrichtung selbst in der Richtung P1 stationär bleibt und sich der Kunststoffvorformling bewegt, bevorzugt führt jedoch die Beaufschlagungseinrichtung 152 einen entsprechenden Hub aus.

Das Bezugszeichen 154 bezieht sich auf eine Ventilanordnung bzw. einen Ventilblock. Die einzelnen Ventile dieser Ventilanordnung können dabei als pneumatisch betätigte Ventile ausgeführt sein, wobei eine Steuerluft zum Betätigen dieser Ventile auch unsteril sein kann, selbst wenn sich die Ventilanordnung in ihrer Gesamtheit im Reinraum befindet.

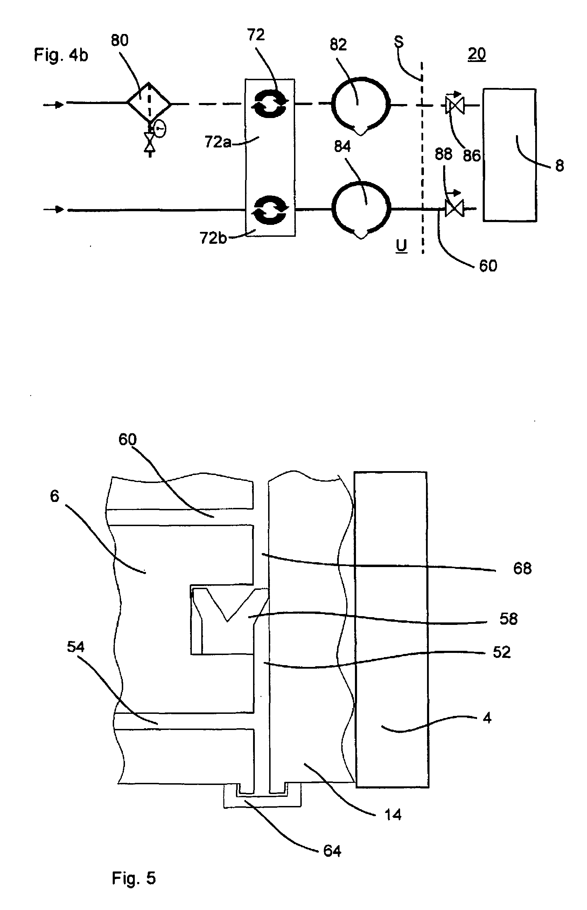

Die Figuren 4a und 4b zeigen zwei mögliche Ausgestaltungen einer Medienzuführung. Bei Fig. 4a gelangt das fließfähige Medium, insbesondere Prozessluft ausgehend von einem Reservoir 65 zunächst zu einem Drehverteiler 72. Nach diesem Drehverteiler 72, also insbesondere bereits in einem drehenden Bereich der Blasmaschine teilt sich die Prozessluft in einem Verteilungspunkt 75 auf zwei Zuführleitungen 74 und 76 auf. Das in der Zuführleitung 76 strömende fließfähige Medium gelangt in einen Mediensterilisator 80 und wird dort (z.B. mittels Sterilfiltern) sterilisiert. Danach gelangt das so sterilisierte Medium z.B. in einen Ringkanal 82, um von dort zu den einzelnen Umformungsstationen 8 zum Blasen der Kunststoffvorformlinge geleitet zu werden. Das Bezugszeichen S kennzeichnet schematisch eine Grenze des Sterilraums.

Die zweite Zuführleitung 74 fördert unsterile Prozessluft in einen weiteren Ringkanal 84. Ausgehend von diesem Ringkanal gelangt die unsterile Prozessluft ebenfalls in den Sterilraum 20 und von dort ebenfalls zu den Umformungsstationen 8. Die Bezugszeichen 86 und 88 beziehen sich auf Ventile, die in den Zuführleitungen angeordnet sind.

Bei der in Fig. 4b gezeigten Ausführungsform wird die Prozessluft bereits vor den Drehverteilern 72a, 72b aufgeteilt, so dass hier über den oberen Drehverteiler sterile Luft zu der Umformungsstation 8 geführt wird und über den unteren Drehverteiler unsterile Luft. Das Bezugszeichen 80 kennzeichnet wiederum einen Mediensterilisator. Das Bezugszeichen 60 in den Figuren 5 kennzeichnet die Zuführeinrichtung zum Zuführen des Steuermediums an die Umformungsstation 8, welche innerhalb des Sterilraums 20 angeordnet ist.

Figur 5 zeigt eine grob schematische Darstellung zur Veranschaulichung der Erfindung. Dabei ist ein Blasformträger 6 dargestellt, an dem über eine Trägerschale 14 eine Blasform 4 (nur schematisch dargestellt) angeordnet ist. Beim Wechseln von Blasformen werden diese dabei von der Trägerschale abgenommen, die Trägerschale 14 verbleibt jedoch an dem Blasformträger 6.

Zwischen dem Blasformträger 6 und der Trägerschale 14 wird ein Luftraum 68 ausgebildet, der hier das oben erwähnte Druckkissen darstellt. Durch Beaufschlagung dieses Luftraums 68 mit Druckluft werden die Trägerschale 14 und der Blasformträger 6 auseinander gespreizt bzw. im Arbeitsbetrieb zwei sich gegenüberliegende Blasformteile (nur eines hier gezeigt) zusammengedrückt. Das Bezugszeichen 60 kennzeichnet die Zuführeinrichtung, bei der es sich hier um einen Kanal handelt, durch den unsterile Luft in den Luftraum geleitet wird. Die sich gegenüberliegenden Flächen der Trägerschale 14 und des Blasformträgers 6 sind hier eben ausgebildet, können jedoch auch gekrümmt sein. Das Bezugszeichen 58 kennzeichnet eine Dichtungseinrichtung, welche einen Luftraum 68 gegenüber einer Kammer 52 abdichtet. Diese Dichtungseinrichtung 58 kann dabei umlaufend um den Luftraum 68 ausgebildet sein. Dieser Luftraum bildet hier das Druckkissen aus.

Falls gleichwohl unsterile Luft diese Dichtungseinrichtung 58 passiert, gelangt diese Luft in die Kammer 52, die, wie oben erwähnt, druckentlastet ausgebildet ist. Über eine Abführleitung 54 kann das unsterile Medium wieder aus dem Sterilraum 20 abgeführt werden. Die Kammer 52 ist hier ebenfalls umlaufend um den Luftraum 68 ausgebildet.

Das Bezugszeichen 64 kennzeichnet eine weitere Dichtungseinrichtung, welche die Kammer 52 gegenüber dem diese Kammer umgebenden Sterilraum 20 abdichtet. Auf diese Weise wird erreicht, dass in die Kammer 52 gelangendes unsteriles Medium nur über die Abführleitung 54 abgeführt wird und nicht unmittelbar in den Sterilraum 20 austritt. Diese weitere Dichtungseinrichtung ist hier ebenfalls umlaufend um die Kammer 52 ausgebildet.

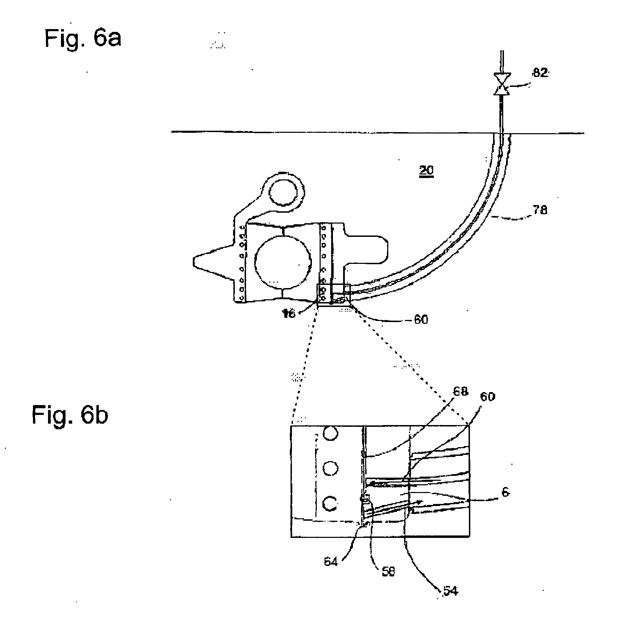

Die Fig. 6a und 6b zeigen zwei weitere Darstellungen zur Veranschaulichung des Druckkissens. Hier ist wieder die Blasform erkennbar, welche an der Trägerschale 14 angeordnet ist. Dabei sind hier auch Bohrungen 96 erkennbar, durch welche ein Temperiermedium zum Temperieren der Blasform strömen kann. Das Bezugszeichen 78 kennzeichnet einen schlauchartigen Körper, in dessen Inneren die Zuführeinrichtung 60 zum Versorgen des Druckkissens angeordnet ist. Daneben kann über diesen schlauchartigen Körper 78 auch Luft (an der Zuführeinrichtung 60 vorbei) aus dem Reinraum 20 in die Umgebung U abgeführt werden. Vorzugsweise ist der schlauchartige Körper aus einem gasdichten Material hergestellt.

Fig. 6b zeigt eine vergrößerte Darstellung der in Fig. 6a gezeigten Vorrichtung. Hier ist auch wieder die Dichtungseinrichtung 58 erkennbar, sowie die Abführleitung zum Abführen eventuell ausgetretener unsteriler Luft. Die Dichtungseinrichtung 64 ist hier als flexibler Körper ausgebildet und trennt die sterilen und unsterilen Zonen der Vorrichtung. Der Bereich zwischen der Dichtungseinrichtung 58 und der Dichtungseinrichtung 64 ist als druckentlastete Kammer ausgebildet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsvorrichtung
- 2: Träger, Transporteinrichtung
- 4: Blasform
- 5: Reckstange
- 6: Blasformträger
- 8: Blasstation, Umformungsstation
- 9: Führungskurve
- 10: Kunststoffvorformlinge
- 10a: Behältnis
- 11: Folgeeinrichtung
- 12: Schlitten
- 13: Boden
- 14: Trägerschale
- 17: Deckel
- 18: Wandung
- 19: Seitenwand, Abschnitt
- 20: Reinraum
- 22: Zuführeinrichtung
- 23: Halteeinrichtung
- 24: Abführeinrichtung
- 25: Dichtungseinrichtung
- 26: Träger
- 27: Dichtungseinrichtung
- 28: Träger (für Bodenform)
- 29: Haltekörper
- 30: Heizeinrichtung
- 31: Heizelemente
- 32: Sterilisationseinrichtung
- 36: Übergabeeinheit
- 37: Transportrad
- 40: Befüllungseinrichtung
- 42: Übergabeeinheit
- 44: Transporteinheit
- 50: Anordnung
- 52: Kammer
- 53: Blasdüse
- 54: Abführleitung
- 55: Sterilisationseinrichtung
- 56: Beaufschlagungseinrichtung
- 58: Dichtungseinrichtung
- 60: Zuführeinrichtung
- 64: Dichtungseinrichtung
- 65: Reservoir
- 68: Luftraum
- 72, 72a,72b: Drehverteiler
- 74,76: Zuführleitungen
- 75: Verzweigungspunkt
- 78: schlauchartiger Körper
- 80: Mediensterilisator
- 82, 84: Ringkanal
- 86,88: Ventil
- 96: Bohrungen
- 152: Beaufschlagungseinrichtung
- 154: Ventilanordnung
- 156: Zuführung für Blasluft
- 158: Öffnung zum Abführen der Blasluft
- S: Sterilraumgrenze
- U: Umgebung
- X: Achse
- Y: Richtung
- P1: Richtung

## Patentansprüche

1. Vorrichtung zum Umformen von Kunststoffvorformlingen (10) zu Kunststoffbehältnissen (10a), mit einer Vielzahl von Umformungsstationen (8), welche an einem beweglichen Träger (2) angeordnet sind, wobei die Umformungsstationen (8) jeweils Blasformen (4) aufweisen, welche zur Aufnahme der Kunststoffvorformlinge (10) dienen und innerhalb derer die Kunststoffvorformlinge (10) zu den Kunststoffbehältnissen (10a) umformbar sind, und wobei die Umformungsstationen (8) jeweils relativ zu den Kunststoffvorformlingen (10) bewegbare Beaufschlagungseinrichtungen (152) aufweisen, welche die in den Blasformen (4) angeordneten Kunststoffvorformlinge (10) mit einem sterilen fließfähigen Medium zu deren Expansion beaufschlagen mit einem Reinraum (20) innerhalb dessen die Umformungsstationen (8) transportiert werden, wobei dieser Reinraum (20) mittels wenigstens einer Wandung (17, 18, 19) gegenüber der Umgebung (U) angeordnet bzw. abgegrenzt ist
**dadurch gekennzeichnet, dass**
die Vorrichtung (1) wenigstens eine Zuführeinrichtung (60) zum Zuführen eines fließfähigen Steuermediums an wenigstens eine Umformungsstation (8) aufweist, welche Zuführeinrichtung (60) wenigstens abschnittsweise innerhalb des Reinraums (20) verläuft, wobei diese Zuführeinrichtung (60) derart gegenüber dem Reinraum (20) abgedichtet ist, dass das fließfähige Steuermedium auch als unsteriles Medium zu der Umformungsstation (8) führbar ist.

2. Vorrichtung nach Anspruch 1,
**dadurch gekennzeichnet, dass**
innerhalb des Reinraums (20) eine Kammer (52) angeordnet ist, die an einen mit unsterilem Medium beaufschlagbaren Bereich angrenzt.

3. Vorrichtung nach Anspruch 1,
**dadurch gekennzeichnet, dass**
die Kammer (52) als druckentlastete Kammer (52) ausgebildet ist.

4. Vorrichtung nach Anspruch 2,
**dadurch gekennzeichnet, dass**
die Kammer (52) mittels einer Dichtungseinrichtung (64) gegenüber dem Reinraum abgedichtet ist.

5. Vorrichtung nach wenigstens einem der vorangegangenen Ansprüche,
**dadurch gekennzeichnet, dass**
die Vorrichtung eine Abführleitung (54) zum Abführen des unsterilen Steuermediums aus dem Sterilraum (20) aufweist.

6. Vorrichtung nach Anspruch 4,
**dadurch gekennzeichnet, dass**
die Abführleitung (54) in Strömungsverbindung mit der Kammer (52) steht

7. Vorrichtung nach wenigstens einem der vorangegangenen Ansprüche 2 - 5,
**dadurch gekennzeichnet, dass**
zwischen der Kammer (52) und der Zuführeinrichtung (60) eine Dichtungseinrichtung (58) angeordnet ist.

8. Vorrichtung nach wenigstens einem der vorangegangenen Ansprüche,
**dadurch gekennzeichnet, dass**
die Vorrichtung eine Ventilanordnung (154) zum Steuern des den Kunststoffvorformlingen zugeführten gasförmigen sterilen Mediums aufweist und diese Ventilanordnung (154) vorteilhaft mit dem fließfähigen unsterilen Steuermedium zum Steuern der Ventilanordnung (154) beaufschlagt ist.

9. Vorrichtung nach wenigstens einem der vorangegangenen Ansprüche,
**dadurch gekennzeichnet, dass**
die Vorrichtung (1) eine Sterilisationseinrichtung (80) zum Gewinnen des sterilen fließfähigen Mediums aufweist.

10. Verfahren zum Umformen von Kunststoffvorformlingen (10) zu Kunststoffbehältnissen (10a), mit einer Vielzahl von Umformungsstationen (8), welche an einem beweglichen Träger (2) angeordnet sind, wobei die Umformungsstationen (8) jeweils Blasformen (4) aufweisen, welche zur Aufnahme der Kunststoffvorformlinge (10) dienen und innerhalb derer die Kunststoffvorformlinge (10) zu den Kunststoffbehältnissen (10a) umgeformt werden, und wobei in den Umformungsstationen (8) mittels jeweils relativ zu den Kunststoffvorformlingen (10) bewegbaren Beaufschlagungseinrichtungen (152) die in den Blasformen (4) angeordneten Kunststoffvorformlinge (10) mit einem sterilen fließfähigen Medium zu deren Expansion beaufschlagt werden und mit einem Reinraum (20), innerhalb dessen die Umformungsstationen (8) transportiert werden, wobei dieser Reinraum (20) mittels wenigstens einer Wandung (17, 18, 19) gegenüber der Umgebung abgedichtet wird
**dadurch gekennzeichnet, dass**
den innerhalb des Reinraums (20) angeordneten Umformungsstationen (8) in einem Arbeitsbetrieb der Vorrichtung (1) wenigstens zeitweise ein unsteriles fließfähiges Steuermedium zugeführt wird.

## Claims

1. An apparatus for the shaping of plastics material pre-forms (10) into plastics material containers (10a), with a plurality of shaping stations (8) which are arranged on a movable carrier (2), wherein the shaping stations (8) have in each case blow moulds (4) which serve for receiving the plastics material pre-forms (10) and inside which the plastics material pre-forms (10) are capable of being shaped into the plastics material containers (10a), and wherein the shaping stations (8) have in each case stressing devices (152) which are movable relative to the plastics material pre-forms (10), which act upon the plastics material pre-forms (10) arranged in the blow moulds (4) with a sterile flowable medium in order to expand them, with a clean room (20), inside which the shaping stations (8) are conveyed, wherein this clean room (20) is arranged or demarcated respectively from the environment (U) by means of at least one wall (17, 18, 19), **characterized in that** the apparatus (1) has at least one supply device (60) for supplying a flowable control medium to at least one shaping station (8), which supply device (60) extends at least in sections inside the clean room (20), wherein this supply device (60) is sealed off from the clean room (20) in such a way that the flowable control medium is also capable of being conveyed as a non-sterile medium to the shaping station (8).

2. An apparatus according to claim 1, **characterized in that** a chamber (52) which adjoins a region capable of being acted upon with non-sterile medium is arranged inside the clean room (20).

3. An apparatus according to claim 1, **characterized in that** the chamber (52) is designed in the form of a chamber (52) with the pressure released.

4. An apparatus according to claim 2, **characterized in that** the chamber (52) is sealed off from the clean room by means of a sealing device (64).

5. An apparatus according to at least one of the preceding claims, **characterized in that** the apparatus has a removal line (54) for removing the non-sterile control medium from the sterile room (20).

6. An apparatus according to claim 4, **characterized in that** the removal line (54) is connected in terms of flow to the chamber (52).

7. An apparatus according to at least one of the preceding claims, **characterized in that** a sealing device (58) is arranged between the chamber (52) and the supply device (60).

8. An apparatus according to at least one of the preceding claims, **characterized in that** the apparatus has a valve arrangement (154) for controlling the gaseous sterile medium supplied to the plastics material pre-forms, and this valve arrangement (154) is advantageously acted upon with the flowable non-sterile control medium in order to control the valve arrangement (154).

9. An apparatus according to at least one of the preceding claims, **characterized in that** the apparatus (1) has a sterilization device (80) for obtaining the sterile flowable medium.

10. A method of shaping plastics material pre-forms (10) into plastics material containers (10a), with a plurality of shaping stations (8) which are arranged on a movable carrier (2), wherein the shaping stations (8) have in each case blow moulds (4) which are used for receiving the plastics material pre-forms (10) and inside which the plastics material pre-forms (10) are shaped into the plastics material containers (10a), and wherein in the shaping stations (8) the plastics material pre-forms (10) arranged in the blow moulds (4) are acted upon with a sterile flowable medium by means of stressing devices (152) movable relative to the plastics material pre-forms (10) in each case in order to expand them, and with a clean room (20), inside which the shaping stations (8) are conveyed, wherein this clean room (20) is sealed off from the environment by means of at least one wall (17, 18, 19), **characterized in that** a non-sterile flowable control medium is supplied at least for a time in the working operation of the apparatus (1) to the shaping stations (8) arranged inside the clean room (20).

## Revendications

1. Dispositif de transformation de préformes en matière plastique (10) en récipients en matière plastique (10a), avec une pluralité de stations de transformation (8) disposées sur un support (2) mobile, lesdites stations de transformation (8) comportant des moules de soufflage (4) respectifs, prévus pour recevoir les préformes en matière plastique (10) et à l'intérieur desquels les préformes en matière plastique (10) sont transformables en récipients en matière plastique (10a), les stations de transformation (8) comportant des dispositifs d'application (152) respectifs, déplaçables par rapport aux préformes en matière plastique (10), lesquels soumettent les préformes en matière plastique (10) disposées dans les moules de soufflage (4) à un agent fluide stérile afin de les gonfler, avec un compartiment stérile (20) à l'intérieur duquel les stations de transformation (8) sont transportées, ledit compartiment stérile (20) étant isolé de l'environnement (U) par au moins une paroi (17,18,19),
**caractérisé en ce que**
ledit dispositif (1) comprend au moins un dispositif d'alimentation (60) pour l'amenée d'un agent de commande fluide à au moins une station de transformation (8), ledit dispositif d'alimentation (60) s'étendant au moins en sections à l'intérieur du compartiment stérile (20), ledit dispositif d'alimentation (60) étant isolé de manière étanche par rapport au compartiment stérile (20), de telle manière que l'agent de commande fluide peut aussi être amené comme agent non stérile à la station de transformation (8).

2. Dispositif selon la revendication 1,
**caractérisé en ce qu'**
une chambre (52) est située à l'intérieur du compartiment stérile (20), laquelle est adjacente à une zone pouvant être soumise à un agent non stérile.

3. Dispositif selon la revendication 1,
**caractérisé en ce que**
la chambre (52) est réalisée comme chambre (52) à détente de pression.

4. Dispositif selon la revendication 2,
**caractérisé en ce que**
la chambre (52) est isolée de manière étanche par rapport au compartiment stérile, au moyen d'un dispositif de joint (64).

5. Dispositif selon au moins une des revendications précédentes,
**caractérisé en ce que**
ledit dispositif comporte une conduite d'évacuation (54) pour l'évacuation hors du compartiment stérile (20) de l'agent de commande non stérile.

6. Dispositif selon la revendication 4,
**caractérisé en ce que**
la conduite d'évacuation (54) est en liaison d'écoulement avec la chambre (52).

7. Dispositif selon au moins une des revendications 2 à 5,
**caractérisé en ce qu'**
un dispositif de joint (58) est disposé entre la chambre (52) et le dispositif d'alimentation (60).

8. Dispositif selon au moins une des revendications précédentes,
**caractérisé en ce que**
ladite installation comporte un dispositif de soupape (154) pour la commande de l'agent gazeux stérile amené aux préformes en matière plastique, et **en ce que** ledit dispositif de soupape (154) est avantageusement soumis à l'agent de commande fluide non stérile pour la commande dudit dispositif de soupape (154).

9. Dispositif selon au moins une des revendications précédentes,
**caractérisé en ce que**
ladite installation (1) comporte un dispositif de stérilisation (80) pour l'obtention de l'agent fluide stérile.

10. Procédé de transformation de préformes en matière plastique (10) en récipients en matière plastique (10a), avec une pluralité de stations de transformation (8) disposées sur un support (2) mobile, lesdites stations de transformation (8) comportant des moules de soufflage (4) respectifs, prévus pour recevoir les préformes en matière plastique (10) et à l'intérieur desquels les préformes en matière plastique (10) sont transformées en récipients en matière plastique (10a), et les préformes en matière plastique (10) disposées dans les moules de soufflage (4) étant soumises dans les stations de transformation (8) à un agent fluide stérile afin de les gonfler, au moyen de dispositifs d'application (152) respectifs, déplaçables par rapport aux préformes en matière plastique (10), et avec un compartiment stérile (20) à l'intérieur duquel les stations de transformation (8) sont transportées, ledit compartiment stérile (20) étant isolé de l'environnement par au moins une paroi (17,18,19),
**caractérisé en ce que**,
dans un mode de service de travail de l'installation (1), un agent de commande fluide non stérile est amené au moins temporairement aux stations de transformation (8) disposées à l'intérieur du compartiment stérile (20).
